# EUROPEAN PATENT APPLICATION

(11) **EP 1 967 346 A1**
(43) Date of publication of application: **10.09.2008**
(21) Application number: 07004565.3
(22) Date of filing: 06.03.2007
(51) Int. Cl.: B29C 45/14

(54) **Method for manufacturing a packaging comprising an adhesive coating**

(71) Applicant: NORDSON CORPORATION, Westlake, OH 44145-1119 (US)
(72) Inventor: Bagung, Jörg-Olaf, 21407 Deutsch Evern (DE)
(74) Representative: Birken, Lars

(57) **Abstract**

The invention relates to a method for applying an adhesive coating to a pre-manufactured part (1), comprising the steps: supplying the pre-manufactured part (1) to a moulding station, placing the pre-manufactured part in or adjacent to a mould (130) such that at least one first surface section of the part is arranged adjacent to or inside a cavity (131,136) provided in the mould, wherein the inner wall surface of the cavity is designed to define the outer geometry of the adhesive coating, sealing a second surface section (134,135) of the part circumscribing the first surface section against the mould such that the cavity is sealed against the atmosphere along the second surface section (134,135), applying a pressure difference between a source of a liquid curable adhesive and the cavity such that pressure in the cavity is lower than pressure within the source of the liquid curable adhesive, injecting the liquid curable adhesive into the cavity to completely fill the cavity through an injection channel (132,133) connecting the cavity to the source of the liquid curable adhesive, thereby attaching the liquid curable adhesive to the first surface section (131a,136a) of the part, curing the material within the cavity of the mould thereby providing an adhesive coating with a geometry defined by the geometry of the cavity, and releasing the part with the cured adhesive connected to it from the mould.

## Description

The invention relates to a method for applying an adhesive coating to a pre-manufactured part. Further, the invention relates to a coating device for applying an adhesive coating to a pre-manufactured part and a method for fixing two pre-manufactured parts to each other.

In various conventional manufacturing processes it is required to apply an adhesive coating to a pre-manufactured part in order to afterwards fix the pre-manufactured part to another part by adhesive force. Examples for such pre-manufactured parts are a spout which is to be fixed to a beverage packaging, a sealing adhesive coating of a screw fitting or various mounting parts used for parts in the automotive industry.

It is known to apply such adhesive coating using a spray gun or dispensing nozzle. According to this prior art technique the pre-manufactured part which is to be coated with the adhesive is placed underneath an opening of a spray gun and the adhesive is extruded or sprayed out of the opening onto the surface of the pre-manufactured part which is to be coated.

One particular problem related to such prior art application methods and devices occurs when the adhesive coating is to be applied in a specific desired thickness. Whereas it is usually desired to control the thickness of the adhesive coating such that a continuous and constant thickness is achieved over the whole surface region which is to be coated such constant and continuous coating cannot be achieved with prior art technique. One reason for this is the surface tension of the adhesive which requires a certain thickness to prevent irregularities such as voids and non-coated areas in the surface region.

Thus, according to the prior art the adhesive is usually applied as a bead of material, the bead having a thickness which is above the desired thickness of the adhesive layer between the two pre-manufactured parts of the final product, i.e. after the two pre-manufactured parts are fixed to each other by the cured adhesive. Using such bead of material, the adhesive is pressed in the course of connecting the two pre-manufactured parts and thus distributed over the surface region. Such pressing and distribution action, however, often results in undesirable outflow of the adhesive out of the interface region between the two pre-manufactured parts, thus producing the need to clean the parts from such outflow or, even worse, deteriorating aesthetic and functional properties of the final product.

A further drawback related to prior art techniques lies in the fact that the surface region which is to be coated must be accessible for the adhesive which is sprayed or dispensed onto it. Thus, surface regions which are not accessible or which accessibility is poor such as surface regions lying in a recess, behind an undercut or which are masked by another structure of the pre-manufactured part cannot be coated with prior art techniques.

It is an object of the invention to provide a method for applying an adhesive coating to a pre-manufactured part which allows precise adjustment of the thickness of the adhesive coating. It is a further object of the invention to provide a method which reduces the problems related to coating of the interfaces with poor accessibility. Still further, it is an object of the invention to provide a device which is able to conduct such methods.

According to a first aspect of the invention, this object is achieved by providing a method for applying an adhesive coating to a pre-manufactured part, comprising the steps of:
i. supplying the pre-manufactured part to a moulding station,
ii. placing the pre-manufactured part in or adjacent to a mould such that at least one first surface section of the part is arranged adjacent to or inside a cavity provided in the mould, wherein the inner wall surface of the cavity is designed to define the outer geometry of the adhesive coating,
iii. sealing a second surface section of the part circumscribing the first surface section against the mould such that the cavity is sealed against the atmosphere along the second surface section,
iv. applying a pressure difference between a source of a liquid curable adhesive and the cavity such that pressure in the cavity is lower than pressure within the source of the liquid curable adhesive,
v. injecting the liquid curable adhesive into the cavity to completely fille the cavity through an injection channel connecting the cavity to the source of the liquid curable adhesive, thereby attaching the liquid curable adhesive to the first surface section of the part,
vi. curing the material within the cavity of the mould thereby providing an adhesive coating with a geometry defined by the geometry of the cavity, and
vii. releasing the part with the cured adhesive connected to it from the mould.

The invention provides a method for forming a three-dimensional adhesive coating of any geometry with a pre-determined design and dimension. The invention further provides a method for forming such an adhesive coating with high reproducibility and narrow tolerances of the adhesive coating with regard to its design and dimension. Thus, the invention guarantees, that the resulting shape of the adhesive coating can be reproduced precisely since it is exactly defined by the inner geometry of the cavity wherein the adhesive coating is formed.

The cavity according to the invention may be provided within one single mould part or may be provided by a number of mould parts which are assembled together to define in the assembled status the mould and the cavity. In the latter case, the adhesive coating may comprise a recess or an undercut and may be released from the mould after de-assembling the number of mould parts from each other.

The method according to the invention simultaneously forms the adhesive coating and connects it to the first surface section of the part by adhesive force.

For the purpose of the invention it is preferred, that the material of the adhesive coating establishes a strong adhesion to the material of the part in the first surface section whereas adhesion of the material of the adhesive coating to the cavity should be low to facilitate releasing of the part with the adhesive coating from the mould.

The second surface circumscribing the first surface may be a circular line along which the surface of the part is sealingly engaged with a corresponding circular sealing line of the mould, thus establishing a circular shaped first surface. The first surface section may have any shape and the second surface section may circumscribe this first surface section along its periphery.

According to a first preferred embodiment of the invention, the liquid curable adhesive is an adhesive which is adapted to stick to the first surface section in the liquid and solid state and to not stick to the interior surface of the cavity of the mould in the solid state. By this, a strong binding force between the adhesive and the part is established and releasing of the packaging with the adhesive coating from the mould is facilitated. Often, a specific selection of an adhesive depending from the mould material may significantly reduce binding force between the mould and the cured adhesive. Adhesion of the adhesive to the mould may be further decreased by coating the mould with a specific coating permanently fixed to the inner surface of the cavity or by repeatedly coating the surface of the cavity with a separating agent.

According to a further preferred embodiment, the liquid curable adhesive is a hot melt adhesive which is injected into the cavity in the heated liquid state, cured by cooling it and released from the cavity in the solid cooled state. Using hot melt adhesive as the curable material allows rapid processing of the coating method according to the invention and precise control of the curing process. Furthermore, a large number of different types of hot melt adhesives is available and thus, the adhesive may be selected to perfectly fulfil the required functional properties of the adhesive coating and to perfectly stick to the packaging material.

Furthermore, it is preferred that the hot melt adhesive is injected at a temperature in a range between its softening temperature and its softening temperature plus 10% of the difference between its softening temperature and its decomposition temperature. By this, energy consumption of the process can be lowered and the cooling time for curing the hot melt adhesive can be decreased, thus allowing shorter manufacturing cycles and higher output of the process.

Still further, it is preferred that the pressure difference between the source of the liquid curable adhesive and the cavity is provided by applying pressure to the source of the liquid curable adhesive. Whereas the sealing between the second surface region of the part and the mould is preferably perfectly tight, a ventilation opening may be provided connecting the cavity to the atmosphere to allow the air captured in the mould to escape when the adhesive is injected.

According to a further preferred embodiment of the invention a number of pre-manufactured parts is placed in the mould adjacent to a respective number of cavities provided in the mould and the liquid curable adhesive is injected into these cavities simultaneously. By this, a mould for multiple parts is used which increases the output, thus shortening the cycle duration calculated for each coated part. The mould may be a single or a multipart mould.

According to a further preferred embodiment a number of pre-manufactured parts is divided into three fractions and the pre-manufactured parts of each of these fractions are supplied to one of a number of three moulding stations each working in a cycle of subsequent
i. placing a pre-manufactured part within a mould
ii. injecting the liquid curable adhesive, and
iii. curing the liquid material to a solid state and releasing the pre-manufactured part with the cured adhesive sticking to it from the mold.
and wherein each of the three moulding stations works in a different cycle than the other two moulding stations. This embodiment allows efficient manufacturing of adhesive coatings to pre-manufactured parts which are delivered by transport means like a belt or the like.

According to this embodiment, in a first circle, the first moulding station may place a part adjacent to or within a first mould, the second moulding station may inject the liquid curable adhesive into a cavity of a second mould and the third moulding station may cure the liquid adhesive within a cavity of a third mould. In a second cycle, the first moulding station may inject a liquid curable adhesive into a cavity provided in the first mould wherein the part was placed in the first cycle. The second moulding station may cure the liquid adhesive which was injected in the first cycle and the third moulding station may place a new part adjacent to or within the third mould after having released the part with the cured adhesive coating after the end of the first cycle. Hereafter, in a third cycle the first moulding station may cure the liquid adhesive which was injected in the second cycle, the second moulding station may place a new part within a mould and the third moulding station may inject the liquid curable adhesive into the cavity of the third mould wherein the new packaging was placed in the second cycle. In the cycle following the third cycle each moulding station will repeat the steps of the first cycle.

It will be noted, that the single steps of the cycles, as far as they can be done separately, may be transferred from one cycle to the other, e.g. the release of the packaging and the cured material from the mould may be transferred into the first step to be conducted in this step before placing a new part within the mould instead of releasing the packaging and the cured material from the mould in the third step.

Furthermore, it is preferred that the pre-manufactured part is placed in or adjacent to the mould in a mould placement unit and hereafter transported with the mould to an injection unit having an orifice which can be coupled to the mould and the liquid curable adhesive is injected after coupling the orifice to the mould. By this, each packaging receives its own mould and a number of moulds are required to efficiently conduct the manufacturing process. Such embodiment allows efficient coating of multiple parts since the mould can be left onto the part until the injected material is cured and thus, the cycle time at the injection unit is not significantly determined and elongated by the curing time of the injected material.

According to another preferred embodiment of the invention, the pre-manufactured part is placed in the mould and the liquid curable adhesive is injected into the cavity in a mould placement and injection unit. By this, one single mould associated to the injection unit is used in each moulding station, thus reducing the number of moulds.

The two preferred embodiments discussed above may be further improved in that the pre-manufactured part is supplied in a continuous motion to the injection unit or the mould placement and injection unit, respectively, and the injection unit follows the motion of the part while injecting the liquid curable adhesive. With this embodiment, a simplified control of the supply motion of the part can be achieved whereas the injection unit may be arranged such that it can follow the path of the parts within a certain range, e.g. by a pivoting or sliding movement. In particular, the injection unit may follow a reciprocal movement, i.e. after following one part from the starting point of the injection to the end point of the injection or curing, respectively, the injection unit is reciprocated to the starting point of the injection and the mould is placed on the subsequent part or the injection unit is coupled to the subsequent mould, respectively.

According to another preferred embodiment which may be used as an alternative of the continuous supply of the parts according to the embodiment discussed above the pre-manufactured part is supplied in a clocking motion to the injection unit or the mould placement and injection unit, respectively, and the injection unit is held at a fixed position while injecting the liquid curable adhesive. With this embodiment, the injection unit or the mould placement and injection unit may be constructed such that it is mounted at a fixed position related to the transport means supplying the parts and each part is stopped at the injection position for the time of injection or injection and curing, respectively, and hereafter removed from the injection position after injection or injection and curing has been accomplished.

According to a further preferred embodiment a number of pre-manufactured parts is supplied to a moulding station comprising a number of injection units or mould placement and injection units arranged along the periphery of a rotating moulding station wheel. With this embodiment, the steps for manufacturing the adhesive coating can be accomplished along the periphery of the rotating moulding station wheel. Preferably, the number of moulding stations mounted on the rotating table is such that the parts can be supplied to the rotating wheel at a high delivery rate and the parts can be coated in one injection unit or mould placement and injection unit, respectively, during its travel from the point where the parts are delivered to the rotating wheel to the point where the parts are withdrawn from the wheel.

This embodiment may be further improved in that the pre-manufactured parts are supplied to and/or withdrawn from the moulding station wheel in a direction extending perpendicular to the rotation axis of the moulding station wheel to provide a carousel-like moulding station. Alternatively, the embodiment may be further improved in that the pre-manufactured parts are supplied to and/or withdrawn from the moulding station wheel in a direction extending parallel to the rotation axis of the moulding station wheel to provide a revolver-like moulding station. Further, the supply direction and withdrawal direction of the carousel-like and the revolver-like arrangement may be combined.

According to a further preferred embodiment, the pre-manufactured part is supplied to and/or withdrawn from the moulding station by a robotic. By this, a maximum degree of freedom is reached for supplying and withdrawing the parts to/from the moulding station and thus the method according to the invention may be included in any manufacturing line, in particular in existing manufacturing lines.

Further, it is preferred that the inner contour of the cavity is arranged from the outer contour of the first surface at a predetermined constant distance when the product is placed adjacent to or inside the cavity. By this, a coating with a constant and continuous thickness can be produced. Alternatively, the inner contour of the cavity may be shaped to be arranged in a first distance from the first surface with the part being placed adjacent to or within the mould with some surface sections and in a second, different distance with some other surface sections. By this, a predetermined, discontinuous coating geometry may be produced such geometry facilitating the fixing procedure of the two pre-manufactured parts to each other in a subsequent step.

A further aspect of the invention is a method for connecting a first pre-manufactured part to a second pre-manufactured part, comprising the steps:
- transferring the first pre-manufactured part to a moulding station, and
- applying an adhesive coating to at least a part of the surface of the first pre-manufactured part in the moulding station by the steps of:
   i. placing the pre-manufactured part in or adjacent to a mould such that at least one first surface section of the part is arranged adjacent to or inside a cavity provided in the mould, wherein the inner wall surface of the cavity is designed to define the outer geometry of the adhesive coating,
   ii. sealing a second surface section of the part circumscribing the first surface section against the mould such that the cavity is sealed against the atmosphere along the second surface section,
   iii. applying a pressure difference between a source of a liquid curable adhesive and the cavity such that pressure in the cavity is lower than pressure within the source of the liquid curable adhesive,
   iv. injecting the liquid curable adhesive into the cavity to completely fille the cavity through an injection channel connecting the cavity to the source of the liquid curable adhesive, thereby attaching the liquid curable adhesive to the first surface section of the part,
   v. curing the material within the cavity of the mould thereby providing an adhesive coating with a geometry defined by the geometry of the cavity, and
   vi. releasing the part with the cured adhesive connected to it from the mould.
      treating the cured adhesive to activate its adhesive properties
- connecting the first and the second pre-manufactured part with the adhesive, and
- curing the adhesive.

With this method, forming of any adhesive coating onto pre-manufactured parts is possible, thus allowing cost-efficient production of parts with adhesive coatings thereon. The adhesive may preferable be a hot melt adhesive thus allowing to inject the adhesive at melting temperature and to cure the adhesive by cooling it. In such case, the treating of the cured adhesive to activate it may comprise heating of the adhesive by hot air or radiation.

A second further aspect of the invention is a method for fixing two pre-manufactured parts to each other, comprising the steps:
i. supplying the pre-manufactured parts to a moulding station,
ii. placing the pre-manufactured parts in or adjacent to a mould such that a recess between the parts is arranged adjacent to an injection channel provided in the mould,
iii. sealing a surface section of the part circumscribing the recess against the mould such that the recess is sealed against the atmosphere along the surface section,
iv. applying a pressure difference between a source of a liquid curable adhesive and the recess such that pressure in the recess is lower than pressure within the source of the liquid curable adhesive,
v. injecting the liquid curable adhesive into the recess through the injection channel,
vi. curing the material within the recess, and
vii. releasing the pre-manufactured parts connected to each other by the cured adhesive in recess from the mould.

This process allows rapid and secure fixation of two parts to each other. Further, reinforcement of the pre-manufactured parts by the adhesive filled into the recess is achieved and further functional properties may be provided to such pre-manufactured parts, e.g. by filling the recess with a material which is different from the part material itself or by providing a thermal and/or electrical insulation between the two pre-manufactured parts by the adhesive filled into the recess.

The two aspects of the invention explained above may be further improved in such a way as described above with respect to the step of applying an adhesive coating, in this case, the injection of the adhesive into the cavity corresponds to the filling of the adhesive into the recess. It is to be noted, that in the case that the method is used for filling a recess according to the second aspect of the invention, a cavity is not necessarily required in the mould but the mould may only provide a sealing engagement with a surface section of the part circumscribing or covering the recess and may have one or more supply channels for injecting the liquid curable adhesive into the recess. However, a cavity may be provided and in such case, the material filled into the recess may enhance connection of a adhesive coating formed within the cavity to the part.

According to another aspect of the invention, a coating device for applying an adhesive coating to a pre-manufactured part is provided, the device comprising:
- a moulding station for forming a three-dimensional adhesive coating, comprising:
   i. a mould having a sealing adapted to sealingly engage a surface section of a part,
   ii. a cavity circumscribed by the sealing, the cavity being formed as a moulding cavity for the adhesive coating,
   iii. an injection channel connecting the cavity to a source of a liquid curable adhesive,
   iv. pressure means for applying a pressure difference between the source of the liquid curable adhesive and the cavity such that pressure in the cavity is lower than pressure within the source of the liquid curable adhesive.

Such coating device allows cost-efficient application of a three-dimensional adhesive coating to parts.

The coating device may comprise heating means for heating a hot melt adhesive to liquid state for injecting it into cavity.

Furthermore, the pressure means may preferably be adapted to apply pressure to the source of the liquid curable adhesive.

Still further, the mould may preferably comprise a number of sealings adapted to sealingly engage a surface of a corresponding number of parts or a number of surfaces of one single part, wherein a corresponding number of cavities are provided in the mould. By this, a plurality of coatings may be produced simultaneously, thus increasing the output of the Coating device.

According to a further preferred embodiment, the coating device may comprise a number of three moulding stations and a control unit adapted to control the moulding stations such that in each of the moulding stations the steps of placing a part within a mould, injecting the liquid curable adhesive into the cavity, and curing the liquid adhesive to a solid state are subsequently processed and that each of the three moulding stations work in a different cycle than the other two moulding stations. By this, a cost-efficient and time-saving manufacturing process is realized for coating of multiple parts. With regard to details of this preferred embodiment of the coating device it is referred to the detailed description of the preferred embodiment of the method involving three moulding stations as discussed above.

Furthermore, it is preferred that the moulding station comprises a mould placement unit for engaging the mould with the part, an injection unit with an orifice for injecting the liquid curable adhesive into the mould and transport means for transferring the part with the mould engaged to it from the mould placement unit to the injection unit. With this embodiment, placing the mould and injecting the liquid curable adhesive is done at different locations. Preferably, a number of moulds is involved in the manufacturing process thus allowing to reduce cycle time since it is not required to wait for curing of the material until the injection unit can inject the liquid material into a subsequent mould which was placed by the mould placement unit on the subsequent part.

Alternatively, the coating device according to the invention may be further improved in that the moulding station comprises a mould placement and injection unit for engaging the mould with the part and for injecting the liquid curable adhesive into the cavity. By this, one single mould is used for each injection unit thus reducing the number of moulds.

Furthermore, the coating device may be further improved in that it comprises transport means for continuously supplying the parts to the injection unit or the placement and injection unit, respectively, and actuating means coupled to the injection unit or the placement and injection unit, respectively, to move the unit such that it follows the motion of the package while injecting the liquid curable adhesive. In this embodiment, the unit may be arranged such that it may conduct a pivoting or sliding movement to follow the path of the parts. Preferably, the unit can be reciprocally moved between a start and an end position for the injection process.

Alternatively, the transport means may be adapted to supply the parts in a clocking or indexed motion to the injection unit or the placement and injection unit, respectively. With this embodiment, the injection unit or the mould placement and injection unit can be held in a fixed position in relation to the transport means and each part is stopped for the time of injecting or injecting and curing the liquid curable adhesive into the cavity of the mould, respectively.

Preferably, the moulding station comprises a number of injection units or mould placement and injection units arranged along the periphery of a rotating moulding station wheel. Such arrangement allows rapid placement of the mould and injecting of the liquid curable adhesive into the cavity of the mould and further allows curing of the liquid material to a solid state on the rotating wheel.

The embodiment discussed above may be further improved by providing transport means for supplying the parts to and/or withdraw the parts from the moulding station wheel in a direction extending perpendicular to the rotation axis of the moulding station wheel to provide a carousel-like transport chain. Alternatively, this embodiment may be further improved by providing transport means for supplying the parts to and/or withdraw the parts from the moulding station wheel in a direction extending parallel to the rotation axis of the moulding station wheel to provide a revolver-like moulding station. By this, a carousel-like or a revolver-like transport sequence or a combination of the two may be provided to adapt the Coating device according to the invention to different supply arrangements and to the space available for the Coating device.

Finally, the coating device may comprise a robotic for supplying the parts to and/or withdraw the parts from the moulding station, thus allowing high flexibility with regard to supply and withdrawal of the parts.

A further aspect of the invention is a connecting device for fixing two pre-manufactured part to each other, the device comprising
- assembling means for arranging the two pre-manufactured parts adjacent to each other to form a recess between them,
- a moulding station for forming an adhesive layer connecting the two pre-manufactured parts, the moulding station comprising:
   i. a mould having a sealing adapted to sealingly circumscribe an injection region comprising the recess formed between the two pre-manufactured parts,
   ii. an injection channel connecting the injection region to a source of a liquid curable adhesive,
   iii. pressure means for applying a pressure difference between the source of the liquid curable adhesive and the injection region such that pressure in the injection region is lower than pressure within the source of the liquid curable adhesive.

A preferred use of the coating device according to the invention is to apply a three-dimensional adhesive coating to a pre-manufactured part, in particular a spout for a beverage packaging, a sealing adhesive coating in a screw fitting or an adhesive coating onto a furniture part or onto a mounting element such as a clip, anchor, pin, plug or bolt for assembling furniture parts.

Further, the coating device may preferably be used for applying a three-dimensional adhesive coating to a pre-manufactured part of an automobile or onto a mounting element for automotive parts such as a clip used for fixing one automotive part to another automotive part.

Finally, the coating device according to the invention may preferably be used for filling a recess in a pre-manufactured part to stabilise the part, e.g. to stabilise two sections of the part folded onto each other or between two pre-manufactured parts arranged adjacent to each other.

A preferred embodiment of the invention will be discussed referring to the figures, wherein
- Figure 1: shows a schematic sectional side-view of an exemplary arrangement of a mould placed adjacent to a part and an injecting gun adapted to engage the mould,
- Figure 2: shows a schematic perspective view of a first embodiment of the invention including three moulding stations each including five mould placement and injection units according to Figure 1,
- Figure 3: shows a schematic perspective view of a second embodiment of the invention including one single mould placement and injection unit according to Figure 1,
- Figure 4: shows a perspective schematic view of a third embodiment of the invention including one single injection unit,
- Figure 5: shows a schematic, perspective view of a fourth embodiment of the invention including a moulding station having a number of mould placement and injection units in a circular arrangement to form a moulding carousel,
- Figure 6: shows a schematic, perspective view of a fifth embodiment of the invention including a moulding station having a number of mould placement and injection units in a circular arrangement forming a moulding wheel,
- Figure 7: shows a schematic perspective view of a sixth embodiment of the invention with a robotic for feeding a mould placement and injection unit directly, and
- Figure 8: shows a schematic perspective view of a seventh embodiment of the invention with two robotics supplying a moulding station and with-drawing moulded products from the moulding station.

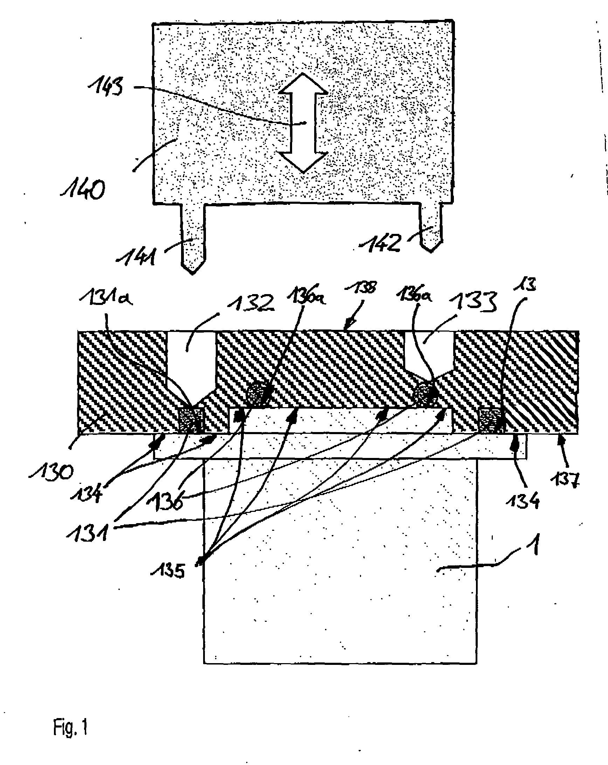

Referring first to Figure 1 an injection unit is shown, comprising a mould 130 which is placed onto the joint face of a beverage cap 1. The mould 130 comprises on its bottom side a sealing surface 134 which sealingly engages the joint face of the beverage cap 1. A further sealing surface 135 of the mould engages another joint face of the beverage cap 1.

The mould comprises a first cavity 131 which forms an annular-shaped cavity with a rectangular cross section. First cavity 131 is open to the bottom surface 137 of the mould 130. The first cavity 131 communicates with an injection channel 132 which extends to the top face 138 of the mould 130.

Further, mould 130 comprises a second cavity 136 which forms an annular-shaped cavity of circular cross section. Second cavity 136 is open to the bottom side 137 of the mould 130 and communicates with a second injection channel 133 extending to the top face 138 of the mould 130.

An injection gun 140 is provided having a first injector nozzle 141 adapted to engage the first injector channel 132 and a second injector nozzle 142 adapted to engage the second injector channel 133. The injection gun 140 can be raised and lowered as indicated by the arrow 143. In its lowered position the injector nozzles 141, 142 enter into the injection channels 132, 133, respectively, and a liquid curable adhesive can be injected from the injection gun 140 into the first and second cavity 131, 136.

Since the first and second cavity 131, 136 are open to the bottom side of the mould, the adhesive injected into these cavities will be connected to the beverage cap which is placed adjacent to the bottom side of the mould 130 in regions 131a, 136a.

Sealing surfaces 134, 135 prevent the adhesive material injected into the cavities to spread over other surface regions of the beverage cap than those who are directly adjacent to the cavities 131, 136 and thus close cavities 131, 136 on the bottom side.

After the liquid adhesive was filled into the cavities the adhesive is cured within the cavities. Figure 1 shows the cavities with adhesive filled into them. Hereafter, the mould is removed from the cap and the cured adhesive material stays in adhesive contact onto the cap thus forming two annular-shaped protrusions onto the upper side of the cap, the protrusions having a pre-determined geometry defined of a rectangular or annular cross-section, respectively, by the inner geometry of the cavities.

The cap with the adhesive material formed onto it may then be transferred to a further processing station wherein the adhesive material is heated to provide adhesive properties and the cap then is connected to a beverage packaging.

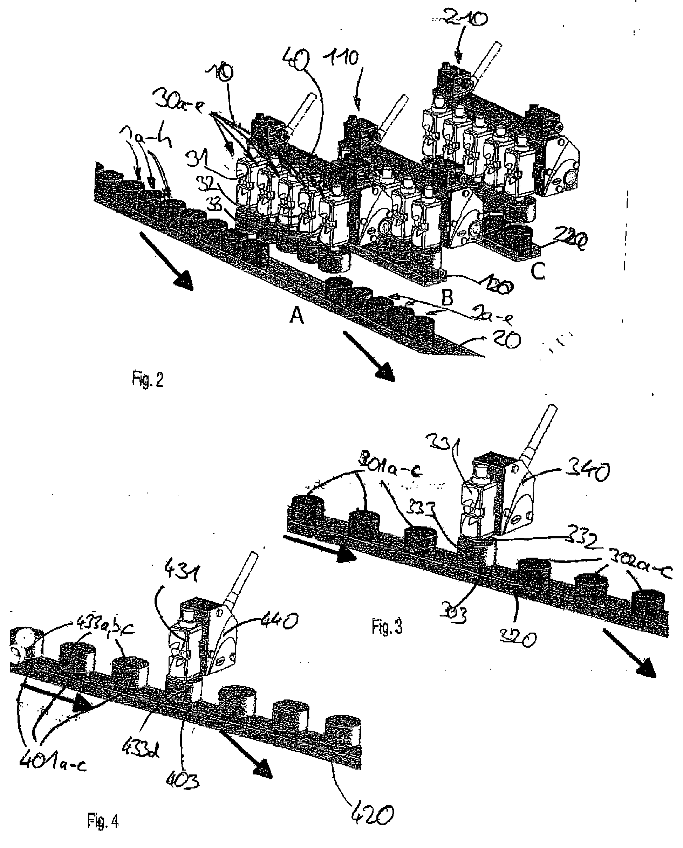

Referring now to Figure 2, a total of three moulding stations 10, 110, 210 are provided. Each of the moulding stations is supplied with pre-manufactured parts like a beverage cap by way of three rails 20, 120, 220 respectively.

The moulding stations are identical with regard to their design and the design is by way of example explained referring to moulding station 10 hereinafter.

The moulding station 10 comprises a total number of five mould placement and injection units 30a-e. The mould placement and injection units 30a-e may correspond to the injection unit shown in figure 1. The injection units are arranged in a row extending parallel and inline with the rail 20 supplying the pre-manufactured parts 1 a-h and withdrawing the finished parts 2a-e. Each mould placement and injection unit 30a-e comprises an injection unit 31 with an injection conduit 32 which is connected to a mould 32. The mould 32 comprises a lower surface with a recess having a seal which is adapted to sealingly engage an upper surface of the pre-manufactured parts 1a-h along a circular line. By this, a circular surface is enclosed to which a three-dimensional adhesive coating can be attached in the coating process.

Further, the moulds comprise a cavity (not shown in Fig. 2) extending from the region in the recess which is encircled by the seal. The cavity is connected to the injection conduit.

The mould placement and injection units 30a-e are mounted to an actuation and supply bar 40 extending parallel to the rail 20. Actuation and supply bar 40 serves to hold the injection units 31 in a row and can be adjusted with respect to its vertical and horizontal arrangement in order to adapt the moulding station 10 to pre-manufactured parts of various design and dimension.

The actuation and supply bar 40 further serves to supply each of the injector units 31 with hot melt material in a liquid state and for this purpose, an electrical heating device is included in actuation and supply bar 40 and the injector units 31.

The actuation and supply bar 40 is actuated via an actuator (not shown) to allow reciprocal vertical movement of the mould placement and injector units 30a-e. By this, the injector units 31 and the moulds 33 mounted thereto can be lowered onto five pre-manufactured parts below the moulds 33, respectively, at the beginning of the cycle for forming of the adhesive coating. Hereafter, the injection units 31 are activated to inject the molten hot melt material into the cavity of the mould 33 and attach the hot melt adhesive to the circular shaped surface circumscribed by the seal of the mould on the pre-manufactured part. The mould is held in contact with the parts for a time sufficient to cure the hot melt material and to shorten the curing time cooling of the mould may be provided. After the injected adhesive has cured the actuation and supply bar 40 is raised and thus the pre-manufactured parts with the adhesive coating formed thereon is released from the moulds 33 and can be withdrawn from the moulding station 10 along the rail 20.

According to the first embodiment, three moulding stations are provided each being supplied with fractions of pre-manufactured parts via three individual rails 20, 120, 220. As depicted in Figure 2, moulding station 10 is in the process of reloading pre-manufactured parts, moulding station 110 is in the process of injecting the hot melt material into the mould and moulding station 210 is in the process of cooling and releasing the pre-manufactured parts with the adhesive coatings formed thereon from the moulds. By this, a timely staggered manufacturing process is achieved allowing a continuous delivery of the parts and a continuous withdrawal of the finished parts via the transport rails 20, 120, 220.

Referring now to Figure 3, a single mould placement and injection unit 310 is shown, comprising an injector 331, an injection unit 332 and a mould 333 which is connected to the injector 331 via the injection unit 332. The injector 331 is coupled to an actuation and supply unit 340 supplying the injector with molten hot melt adhesive. The actuation and supply bar 340 can be lowered and raised by actuation means (not shown) to couple the mould 333 to pre-manufactured parts 301 a-c which are delivered to the mould placement and injection unit via a rail 320.

In the process cycle shown in Figure 3 a pre-manufactured part 303 is coupled to the mould 333 and injection of the hot melt adhesive takes place. After cooling of the hot melt adhesive injected into the cavity (not shown) in the mould 333, the actuation and supply bar 340 is raised thus raising mould 333 from the finished part 303 and allowing to withdraw the part from below the mould 333.

In the embodiment shown in Figure 3 the pre-manufactured parts may be supplied in a continuous motion and the actuator and supply unit 340 may be adapted to then follow the path of the pre-manufactured parts for the time of placing the mould 330 on top of the parts and injecting and cooling the hot melt adhesive. The bar 340 may follow a reciprocal movement between a start and an end position of the placement and cooling cycle, respectively. Alternatively, the pre-manufactured parts 301a-c may be supplied in a clocking (indexed) motion thus allowing to stop each of the parts in the position depicted for the part 303 in Figure 2 and to keep the actuation and supply bar 340 at a fixed position with regard to the rail 320.

Figure 4 shows a third embodiment of the invention, wherein an actuation and supply bar 440 is coupled to an injector unit 431 which is similar to the units 331, 340 described above with reference to Figure 3.

In contrast to the embodiment shown in Figure 3, the injector 431 is not permanently coupled to a mould but has an injection conduit at its bottom side which is adapted to be coupled to such a mould. Accordingly, the pre-manufactured parts 401a-c are supplied to the injector unit 431 with a mould 433a-c placed on top of each part. Thus, as depicted for pre-manufactured part 403 and mould 433d, the injector 431 has only to be lowered to inject the hot melt adhesive and can immediately hereafter be raised and the part 403 withdrawn from the moulding station with the mould 433d still placed on top of the part. Thus, cooling of the injected material can take place during withdrawal and further transport of the part and the cycle time at the moulding station is significantly reduced.

As described for the second embodiment shown in Figure 3, the pre-manufactured parts 401a-c with the moulds 431a-c placed thereon can be delivered in a continuous or a clocking (indexed) motion, wherein the former requires the injection unit to follow the path of the parts and moulds for the time of injecting the hot melt adhesive and the latter allows to keep the injection unit 431 at a fixed position with regard to rail 420.

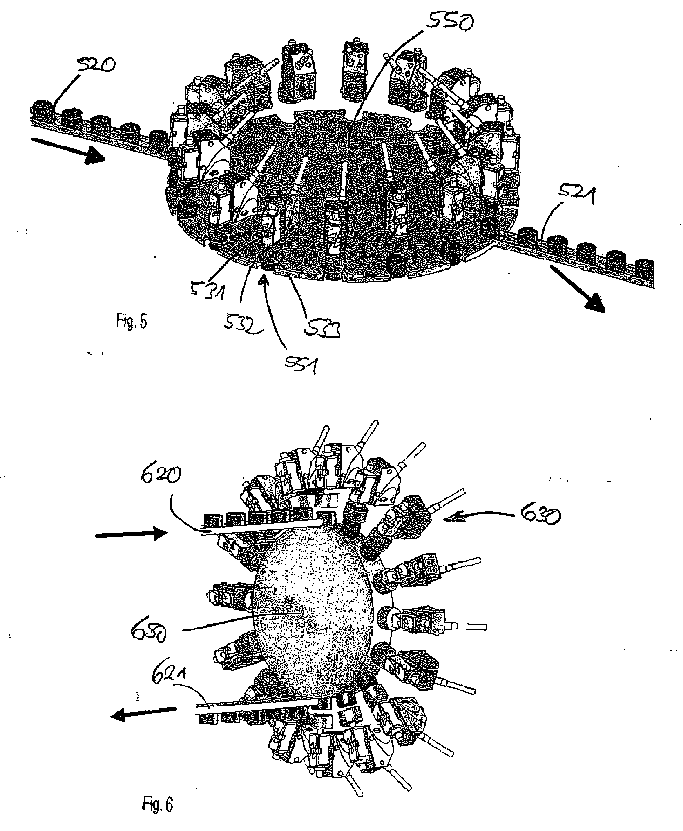

Figure 5 shows a fourth embodiment of a moulding station according to the invention. The manufactured parts are supplied via a first rail 520 to a circular shaped table 550. The table 550 is adapted to rotate around a vertically oriented axis and a number of mould placement and injection units is arranged along the periphery of table 550 in such.a way, that the actuating movement of the mould is oriented in a axial direction with regard to the table 550.

Each mould placement and injection unit arranged along the periphery of table 550 corresponds to the mould placement and injection unit described with reference to the embodiment shown in Figure 2 and comprises a mould 533, an injection unit 531 and an injection conduit 532 connecting the injection unit 531 with the mould 533. The injection unit is coupled to an actuating and supply bar 540 which is connected to the table 550 and follows rotation of the table. Actuation and injection each mould placement and injection unit arranged at the periphery of the table 550 is controlled individually.

In the table 550 a number of radial recesses 551 is provided which are shaped to accommodate the pre-manufactured parts supplied from rail 520. Each recess 551 corresponds to one mould placement and injection unit.

The pre-manufactured parts are supplied via the rail 520 into the radial recesses in the table 550 and transported along the periphery of table 550 within these recesses. During transport along a half circle the mould corresponding to the respective recess is placed on top of the pre-manufactured part, a hot melt adhesive is injected into the cavity of the mould and adhered to the surface circumscribed by the seal of the mould and is cured to form the adhesive coating as defined by the shape of the cavity in the mould. After curing the mould is lifted from the finished part and the part is withdrawn from recess to a rail 521.

Figure 6 shows a fifth embodiment of a moulding station according to the invention. The moulding station comprises a wheel 650. Along the periphery of the wheel a number of mould placement and injection units 630 are arranged in such a way, that the actuating movement of the mould is oriented in a radial direction with regard to the wheel 650. Each mould placement and injection unit 630 may be constructed according to the corresponding units described with reference to Figure 1.

Pre-manufactured parts are supplied to the moulding wheel 650 via an upper rail 620 and placed on the outer radial surface of the moulding wheel. The parts are fixed in this position on the outer radial surface. The mould is lowered thus establishing the sealing contact around the first surface. The moulding wheel 650 is adapted to rotate around a horizontally oriented central axis which is oriented parallel to the upper supply rail 620.

The adhesive coating is formed on the pre-manufactured parts during rotation of the moulding wheel along 180° and after the adhesive coating has been cured and the mould has been lifted from the part, the parts are withdrawn from the moulding wheel via a bottom rail 621 which is parallel to the upper supply rail 620.

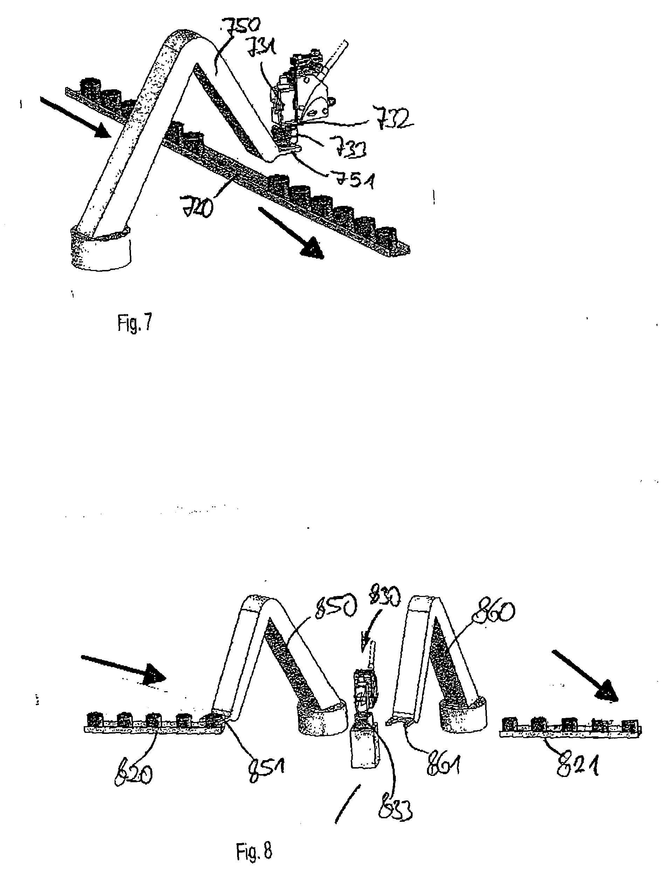

Figure 7 shows a further embodiment of a moulding station according to the invention. In this embodiment, pre-manufactured parts are supplied via a rail 720 and one single part is gripped by a gripper 751 mounted to a robotic arm 750 and lifted from the rail 720. The part is fed to a single mould placement and injection unit comprising an injection unit 731 and a mould 733 connected to the injector unit via an injection conduit 732.

Basically, the mould placement and injection unit 730 can be designed in the same way as the mould placement and injection unit of the second embodiment described with reference to Figure 3. However, for the unit 730 of the sixth embodiment it is not required that a movement of the mould is performed since this movement which is required to place the pre-manufactured part within the mould and to establish the sealing contact can be performed by the robotic arm 750. Thus, the injector unit 731 and the mould 733 can be held in a fixed position in relation to the rail and the introduction of the part into the mould can be performed by a respective movement of the robotic arm 750.

During injection and curing of the hot melt adhesive the robotic arm 750 holds the pre-manufactured parts in close contact to the mould 733. After curing of the adhesive coating, the part is withdrawn from the mould by the robotic arm 750 and placed on the rail 720 to be further transported to a subsequent handling station.

Finally, Figure 8 shows a further embodiment of a moulding station wherein the pre-manufactured parts are supplied via a first rail 820 and taken from this rail by a first gripper 851 of a first robotic arm 850. The first robotic arm transfers the part to a moulding station having a single injection unit 830 which may be designed as described with reference to Figure 1.

After placing the pre-manufactured parts below the mould 833 of the mould placement and injection unit 830 the gripper 851 may release the part and the robotic arm may be transferred to the rail 820 again to grip the subsequent pre-manufactured part.

The mould placement and injection unit 830 places the mould, injects the hot melt adhesive and cures the same. After curing has finished, the mould is withdrawn from the part and the part is transferred by a second robotic arm 860 with a respective gripper 861 to a second rail 821 for transferring the parts to a subsequent handling station.

As it will be noted, the method used for forming the adhesive coating onto the parts always comprises the following steps:
1. A sealing of a mould is placed adjacent to a surface of a pre-manufactured part and brought into sealing engagement with a surface section of this part. Preferably, the mould is adapted to have a shape conforming to a section of the pre-manufactured part to safely fix the part in relation to the mould.
   Within the mould, a cavity is provided which is adjacent and in connection to a surface section of the part which is sealed by the sealing engagement.
2. In a second step, the cavity is filled with a hot melt adhesive material. For this purpose, the cavity is connected to an injector unit via an injection channel. By injecting the hot melt adhesive material, the cavity is filled and an adhesive contact to the sealed surface of the part is established.
3. In a third step, the hot melt adhesive within the cavity is cooled to cure and the mould is kept in place during this cooling phase.
4. After curing has finished, the mould is removed from the part leaving the adhesive coating formed by the cured hot melt adhesive material rigidly connected to the part. The part may then be withdrawn from the moulding station and transferred to subsequent handling stations.

## Claims

1. Method for applying an adhesive coating to a pre-manufactured part, comprising the steps:
i. supplying the pre-manufactured part (1) to a moulding station,
ii. placing the pre-manufactured part in or adjacent to a mould (130) such that at least one first surface section (131a; 136a) of the part is arranged adjacent to or inside a cavity (131; 136) provided in the mould, wherein the inner wall surface of the cavity is designed to define the outer geometry of the adhesive coating,
iii. sealing a second surface section (134; 135) of the part circumscribing the first surface section against the mould such that the cavity is sealed against the atmosphere along the second surface section,
iv. applying a pressure difference between a source of a liquid curable adhesive and the cavity such that pressure in the cavity is lower than pressure within the source of the liquid curable adhesive,
v. injecting the liquid curable adhesive into the cavity to completely fille the cavity through an injection channel (132; 133) connecting the cavity to the source of the liquid curable adhesive, thereby attaching the liquid curable adhesive to the first surface section (131 a; 136a) of the part,
vi. curing the material within the cavity of the mould thereby providing an adhesive coating with a geometry defined by the geometry of the cavity, and
vii. releasing the part with the cured adhesive connected to it from the mould.

2. Method according to claim 1,
wherein the liquid curable adhesive is an adhesive material which is adapted to stick to the first surface section in the liquid and solid state and to not stick to the interior surface of the cavity of the mould in the solid state.

3. Method according to claim 1 or 2,
wherein the liquid curable adhesive is a hot melt adhesive which is injected into the cavity in the heated liquid state, cured by cooling it and released from the cavity in the solid cooled state.

4. Method according the previous claim,
wherein the hot melt adhesive is injected at a temperature in a range between its softening temperature and its softening temperature plus 10% of the difference between its softening temperature and its decomposition temperature.

5. Method according to any of the precedent claims,
wherein the pressure difference between the source of the liquid curable adhesive and the cavity is provided by applying pressure to the source of the liquid curable adhesive.

6. Method according to any of the precedent claims,
Wherein one single pre-manufactured part or a number of pre-manufactured parts is placed in the mould adjacent to a respective number of cavities (131, 136) provided in the mould and the liquid curable adhesive is injected into these cavities simultaneously.

7. Method according to any of the precedent claims,
wherein a number of pre-manufactured parts is divided into three fractions and the pre-manufactured parts of each of these fractions are supplied to one of a number of three moulding stations each working in a cycle of subsequent
i. placing a pre-manufactured part within a mould
ii. injecting the liquid curable adhesive, and
iii. curing the liquid material to a solid state and releasing the pre-manufactured part and the cured adhesive from the mold.
and wherein each of the three moulding stations works in a different cycle than the other two moulding stations.

8. Method according to any of the precedent claims 1-7,
wherein the pre-manufactured part is placed in the mould in a mould placement unit and hereafter transported with the mould to an injection unit having an orifice which can be coupled to the mould and the liquid curable adhesive is injected after coupling the orifice to the mould.

9. Method according to any of the precedent claims 1-7,
wherein the pre-manufactured part is placed in the mould and the liquid curable adhesive is injected into the cavity a mould placement and injection unit.

10. Method according to any of the precedent claims 8-9,
wherein the pre-manufactured part is supplied in a continuous motion to the injection unit or the mould placement and injection unit, respectively, and the injection unit follows the motion of the part while injecting the liquid curable adhesive.

11. Method according to any of the precedent claims 8-9,
wherein the pre-manufactured part is supplied in a clocking motion to the injection unit or the mould placement and injection unit, respectively, and the injection unit is held at a fixed position while injecting the liquid curable adhesive.

12. Method according to any of the precedent claims,
wherein the pre-manufactured part is supplied to a moulding station comprising a number of injection units or mould placement and injection units arranged along the periphery of a rotating moulding station wheel.

13. Method according to the precedent claim,
wherein the pre-manufactured part is supplied to and/or withdrawn from the moulding station wheel in a direction extending perpendicular to the rotation axis of the moulding station wheel to provide a carousel-like moulding station.

14. Method according to claim 12,
wherein the pre-manufactured part is supplied to and/or withdrawn from the moulding station wheel in a direction extending parallel to the rotation axis of the moulding station wheel to provide a revolver-like moulding station.

15. Method according to any of the precedent claims,
wherein the pre-manufactured part is supplied to and/or withdrawn from the moulding station by a robotic.

16. Method according to any of the precedent claims,
wherein the inner contour of the cavity is arranged from the outer contour of the first surface at a predetermined constant distance when the product is placed adjacent to or inside the cavity.

17. Method for connecting a first pre-manufactured part to a second pre-manufactured part, comprising the steps of:
- transferring the first pre-manufactured part to a moulding station, and
- applying an adhesive coating to at least a part of the surface of the first pre-manufactured part in the moulding station by the steps of:
i. placing the pre-manufactured part in or adjacent to a mould such that at least one first surface section (131a; 136a) of the part is arranged adjacent to or inside a cavity (131; 136) provided in the mould, wherein the inner wall surface of the cavity is designed to define the outer geometry of the adhesive coating,
ii. sealing a second surface section (134; 135) of the part circumscribing the first surface section against the mould such that the cavity is sealed against the atmosphere along the second surface section,
iii. applying a pressure difference between a source of a liquid curable adhesive and the cavity such that pressure in the cavity is lower than pressure within the source of the liquid curable adhesive,
iv. injecting the liquid curable adhesive into the cavity to completely fille the cavity through an injection channel connecting the cavity to the source of the liquid curable adhesive, thereby attaching the liquid curable adhesive to the first surface section of the part,
v. curing the material within the cavity of the mould thereby providing an adhesive coating with a geometry defined by the geometry of the cavity, and
vi. releasing the part with the cured adhesive connected to it from the mould.
- treating the cured adhesive to activate its adhesive properties
- connecting the first and the second pre-manufactured part with the adhesive, and
- curing the adhesive.

18. Method for connecting two pre-manufactured parts, comprising the steps:
i. supplying the pre-manufactured parts to a moulding station,
ii. placing the pre-manufactured parts in a mould such that a recess between the parts is arranged adjacent to an injection channel provided in the mould,
iii. sealing a surface section of the part circumscribing the recess against the mould such that the recess is sealed against the atmosphere along the surface section,
iv. applying a pressure difference between a source of a liquid curable adhesive and the recess such that pressure in the recess is lower than pressure within the source of the liquid curable adhesive,
v. injecting the liquid curable adhesive into the recess through the injection channel,
vi. curing the material within the recess, and
vii. releasing the pre-manufactured parts connected to each other by the cured adhesive in recess from the mould.

19. Method according to any of the precedent claims 17 or 18, **characterized in that** the steps of applying the adhesive coating or filling the gap is **characterized by** at least one of the characteristics of any of the claims 2-16.

20. Coating device for applying an adhesive coating to a pre-manufactured part the device comprising:
- a moulding station for forming a three-dimensional adhesive coating, comprising:
i. a mould (130) having a sealing (134; 135) adapted to sealingly engage a surface section of a part,
ii. a cavity (131; 136) circumscribed by the sealing, the cavity being formed as a moulding cavity for the three-dimensional adhesive coating,
iii. an injection channel (132; 133) connecting the cavity to a source of a liquid curable adhesive,
iv. pressure means for applying a pressure difference between the source of the liquid curable adhesive and the cavity such that pressure in the cavity is lower than pressure within the source of the liquid curable adhesive.

21. Coating device according to claim 20,
further comprising heating means for heating a hot melt adhesive to liquid state for injecting it into cavity.

22. Coating device according to any of the precedent claims 20 or 21,
wherein the pressure means are adapted to apply pressure to the source of the liquid curable adhesive.

23. Coating device according to any of the precedent claims 20-22,
wherein the mould comprises a number of sealings (131 a, 136a) adapted to sealingly engage a surface of a corresponding number of parts or a number of surfaces (131a, 136a) of one single part and wherein a corresponding number of cavities (131, 136) are provided in the mould.

24. Coating device according to any of the precedent claims 20-23,
comprising a number of three moulding stations (10, 110, 210) and a control unit adapted to control the moulding stations such that in each of the moulding stations the steps of placing a part within a mould, injecting the liquid curable adhesive into the cavity, and curing the liquid adhesive to a solid state are subsequently processed and that each of the three moulding stations work in a different cycle than the other two moulding stations.

25. Coating device according to any of the precedent claims 20-24,
wherein the moulding station comprises a mould placement unit for engaging the mould with the part, an injection unit with an orifice for injecting the liquid curable adhesive into the mould and transport means for transferring the part with the mould engaged to it from the mould placement unit to the injection unit.

26. Coating device according to any of the precedent claims 20-24,
wherein the moulding station comprises a mould placement and injection unit for engaging the mould with the part and for injecting the liquid curable adhesive into the cavity.

27. Coating device according to any of the precedent claims 25-26,
comprising transport means for continuously supplying the parts to the injection unit or the placement and injection unit, respectively, and actuating means coupled to the injection unit or the placement and injection unit, respectively, to move the unit such that it follows the motion of the part while injecting the liquid curable adhesive.

28. Coating device according to any of the precedent claims 25-26,
comprising transport means for supplying the parts to the injection unit or the placement and injection unit, respectively, in a clocking or indexed motion.

29. Coating device according to any of the precedent claims 20-28,
wherein the moulding station comprises a number of injection units or mould placement and injection units arranged along the periphery of a rotating moulding station wheel.

30. Coating device according to the precedent claim,
further comprising transport means for supplying the parts to and/or withdraw the parts from the moulding station wheel in a direction extending perpendicular to the rotation axis of the moulding station wheel to provide a carousel-like transport chain.

31. Coating device according to claim 29,
further comprising transport means for supplying the parts to and/or withdraw the parts from the moulding station wheel in a direction extending parallel to the rotation axis of the moulding station wheel to provide a revolver-like moulding station.

32. Coating device according to any of the precedent claims 20-31,
further comprising a robotic for supplying the parts to and/or withdraw the parts from the moulding station.

33. Connecting device for fixing two pre-manufactured part to each other, the device comprising:
- a moulding station for establishing an adhesive layer connecting the two pre-manufactured parts, the moulding sation comprising:
i. assembling means for arranging the two pre-manufactured parts adjacent to each other to form a recess between them,
ii. a mould having a sealing adapted to sealingly circumscribe an injection region comprising the recess formed between the two pre-manufactured parts,
ii. an injection channel connecting the injection region to a source of a liquid curable adhesive,
iii. pressure means for applying a pressure difference between the source of the liquid curable adhesive and the injection region such that pressure in the injection region is lower than pressure within the source of the liquid curable adhesive.

34. Use of a coating device according to any of the precedent claims for applying a three-dimensional adhesive coating to a pre-manufactured part, in particular to a spout for a beverage part, a sealing adhesive coating in a screw fitting or a fastening adhesive coating to a furniture part.

35. Use of a coating device according to any of the precedent claims for filling a recess in a pre-manufactured part or between two pre-manufactured parts arranged adjacent to each other.

36. Use of a Coating device according to any of the precedent claims for applying a three-dimensional adhesive coating to a pre-manufactured part of an automobile, in particular to a clip used for fixing one automotive parts to another automotive part.
